(19) Europäisches Patentamt
European Patent Office
Office européen des brevets

(11) **EP 4 060 436 A1**

(12) **EUROPEAN PATENT APPLICATION**

(43) Date of publication:
**21.09.2022  Bulletin 2022/38**

(21) Application number: **22162244.2**

(22) Date of filing: **15.03.2022**

(51) International Patent Classification (IPC):
**G05B 19/406** (2006.01)

(52) Cooperative Patent Classification (CPC):
**G05B 19/406; G01H 1/003; B23Q 11/00;**
B23Q 17/00; G05B 2219/37226; G05B 2219/37337;
G05B 2219/37435

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.03.2021   JP 2021045606**
**18.02.2022   JP 2022023574**

(71) Applicant: **Ricoh Company, Ltd.**
**Tokyo 143-8555 (JP)**

(72) Inventors:
• **TAKEHIRA, Osamu**
**Tokyo, 143-8555 (JP)**
• **GOTO, Satoru**
**Tokyo, 143-8555 (JP)**

(74) Representative: **SSM Sandmair**
**Patentanwälte Rechtsanwalt**
**Partnerschaft mbB**
**Joseph-Wild-Straße 20**
**81829 München (DE)**

(54) **DETERMINATION APPARATUS, MACHINING SYSTEM, DETERMINATION METHOD, AND CARRIER MEANS**

(57)     A determination apparatus includes a receiving unit (101a) and a determining unit (102). The receiving unit (101a) receives a detection result of a time-varying physical quantity generated by rotation of a rotator (223) attached to a rotation shaft (221), and rotation angle information of the rotator (223). The determining unit (102) determines a rotation state of the rotator (223) based on the detection result and the rotation angle information.

FIG. 1

**Description**

BACKGROUND

Technical Field

Embodiments of the present disclosure relate to a determination apparatus, a machining system, a determination method, and carrier means.

Related Art

Japanese Examined Patent Publication No. H8-32392 discloses a method for checking unbalance of a tool attached to a spindle of a machine tool. The method includes rotating the spindle at a predetermined rotation speed when a standard tool is mounted on the spindle and when a commanded tool is mounted, and measuring a vibration amplitude of the spindle for a predetermined time and obtaining an average value of peak values thereof. In the method, the tool is determined as being unbalanced when the average value obtained with the commanded tool is larger than the average value obtained with the standard tool, and the tool is not determined as being unbalanced when the average value obtained with the commanded tool is smaller than or equal to the average value obtained with the standard tool.

Japanese Unexamined Patent Application Publication No. 2020-55052 discloses a machine tool for effectively detecting abnormality of a workpiece or a mounting part or a tool. The machine tool includes a spindle rotatable with a workpiece or a tool is mounted thereon, a vibration sensor to measure vibration of the spindle, a controller to control rotation of the spindle, and a detection unit. The detection unit performs fast Fourier transform processing on time domain data of vibration of the spindle measured by the vibration sensor during rotation of the spindle with the workpiece or the tool mounted thereon, to obtain frequency domain data. Further, the detection unit detects a runout of rotation of the spindle based on an intensity of a predetermined natural frequency of the spindle in a state where the workpiece or the tool is mounted or an intensity of a predetermined frequency bandwidth including the predetermined natural frequency in the frequency domain data.

SUMMARY

An object of the present disclosure is to accurately determine a rotation state of a rotator.

According to one embodiment, a determination apparatus includes a receiving unit and a determining unit. The receiving unit receives a detection result of a time-varying physical quantity generated by rotation of a rotator attached to a rotation shaft, and rotation angle information of the rotator. The determining unit determines a rotation state of the rotator based on the detection result and the rotation angle information.

According to another embodiment, a machining system includes the above-described apparatus and a machine. The machine includes the rotator that is a tool to perform machining on a workpiece; and a transmitting unit to transmit the detection result and the rotation angle information to the apparatus.

According to another embodiment, a determination method includes receiving a detection result of a time-varying physical quantity generated by rotation of a rotator attached to a rotation shaft, and rotation angle information of the rotator; and determining a rotation state of the rotator based on the detection result and the rotation angle information.

Another embodiment provides carrier means carrying computer readable code for controlling a computer to perform the method described above.

According to one embodiment, the rotation state of the rotator is accurately determined.

BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:

FIG. 1 is a block diagram illustrating an example of a configuration of a machining system including a diagnostic apparatus according to one embodiment of the present disclosure;
FIG. 2 is a block diagram illustrating a hardware configuration of a machine according to one present embodiment;
FIG. 3 is a block diagram illustrating a hardware configuration of a diagnostic apparatus according to one embodiment;
FIG. 4 is a block diagram illustrating an example of a functional configuration of the diagnostic apparatus according to one embodiment;
FIG. 5 is a diagram illustrating an example of a rotation angle sensor according to one embodiment;

FIG. 6 is a side view of a spindle of the machine according to one embodiment;

FIG. 7 is a diagram illustrating detection results and rotation angle information received by a receiving unit of the diagnostic apparatus according to one embodiment;

FIG. 8 is a flowchart illustrating an example of an overall diagnostic operation performed by the diagnostic apparatus according to one embodiment;

FIG. 9 is a flowchart illustrating an example of model generation operation by the diagnostic apparatus according to one embodiment;

FIG. 10 is a chart illustrating a complex plane plotted with complex numbers that are obtained by Fourier transform on the detection result according to one embodiment; and

FIG. 11 is a chart illustrating a complex plane plotted with absolute values that are obtained by Fourier transform on a detection result according to a comparative example.

The accompanying drawings are intended to depict embodiments of the present invention and should not be interpreted to limit the scope thereof. The accompanying drawings are not to be considered as drawn to scale unless explicitly noted. Also, identical or similar reference numerals designate identical or similar components throughout the several views.

DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

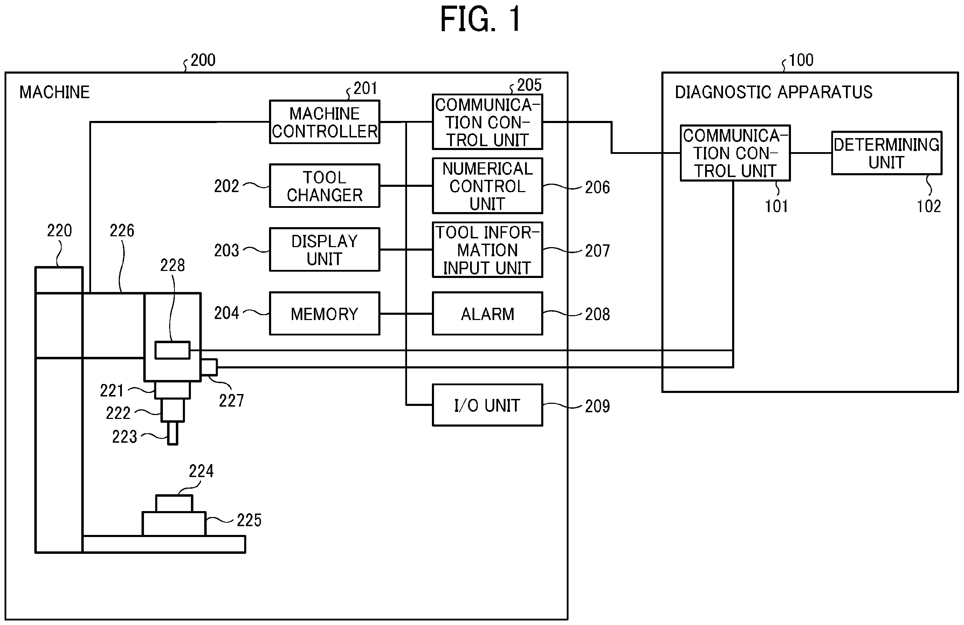

FIG. 1 is a block diagram illustrating an example of a configuration of a machining system including a diagnostic apparatus that is an example of a determination apparatus according to the present embodiment. As illustrated in FIG. 1, the machining system according to the present embodiment includes a diagnostic apparatus 100 (an example of the determination apparatus) and a machine 200. The diagnostic apparatus 100 includes a communication control unit 101 and a determining unit 102.

The machine 200 and the diagnostic apparatus 100 may be connected in any connection form. For example, the machine 200 and the diagnostic apparatus 100 are connected by a dedicated connection line, a wired network such as a wired local area network (LAN), or a wireless network.

The machine 200 includes a machine controller 201, a tool changer 202, a display unit 203, a memory 204, a communication control unit 205, a numerical control unit 206, a tool information input unit 207, an alarm 208, an input/output (I/O) unit 209, and a machine tool 220.

The machine tool 220 has a Z-axis stage 226 that is movable in the vertical direction in FIG. 1 and includes a driver such as a motor. The Z-axis stage 226 includes a spindle 221 which is an example of a rotation shaft of the machine 200. On the spindle 221, a tool holder 222 that holds a tool 223 is mounted. The machine tool 220 includes an XY-axes stage 225 which is movable in biaxial directions in a plane perpendicular to the Z-axis stage 226. The XY-axes stage 225 is disposed below the spindle 221 and includes a driver such as a motor. The XY-axes stage 225 holds a workpiece 224 (an object to be machined). The spindle 221 is an example of a rotation shaft, and the tool 223 is an example of a rotator that is attachable to and detachable from the rotation shaft.

The numerical control unit 206 controls machining by the machine 200 by numerical control. For example, the numerical control unit 206 reads a machining program from the I/O unit 209, and generates and outputs numerical control data for controlling spindle rotation and the position of each axis stage. In the machining program, the storage number of the tool changer 202 is described, and the numerical control unit 206 performs tool change according to the description.

The numerical control unit 206 outputs context information to the communication control unit 205. The context information is information that defines the operation of the tool 223 of the machine 200. The context information includes a plurality of information defined for each operation type of the tool 223. In the present embodiment, the context information includes, for example, tool identification information identifying the tool 223, rotation information of the spindle 221, such as the rotation speed of the spindle 221 (also "spindle rotation speed"), and movement information (e.g., movement speed and during-movement information) of the Z-axis stage 226 and the XY-axes stage 225.

The tool identification information includes at least information indicating a tool type such as a drill, a reamer, or an end mill; and information on the tool such as the number of cutting edges. The tool identification information is input by an operator from the tool information input unit 207 in accordance with the information displayed on the display unit 203. Alternatively, the tool identification information may be obtained by reading a list file of the tool identification information from the I/O unit 209 or inputting information from an external computer via the communication control unit 205. The tool identification information may be stored in the memory 204 so as to be referred to by the machining program.

The numerical control unit 206 transmits, for example, context information defining the current operation of the tool 223 to the diagnostic apparatus 100 via the communication control unit 205. When machining of the workpiece 224 is performed according to the machining program, the numerical control unit 206 controls the type of the tool 223, the positions of the Z-axis stage 226 and the XY-axes stage 225, the rotation speed of the spindle 221, and the like corresponding to the machining process. The numerical control unit 206 transmits context information corresponding to a specific operation among the context information to the diagnostic apparatus 100 via the communication control unit 205. The specific operation is set, among operations of the tool 223, by an operator before performing the actual machining. In the present embodiment, every time the type of operation of the tool 223 is changed, the numerical control unit 206 sequentially transmits context information corresponding to the changed type of operation to the diagnostic apparatus 100 via the communication control unit 205.

The communication control unit 205 (an example of a transmitting unit) controls communication with an external device such as the diagnostic apparatus 100. For example, the communication control unit 205 transmits context information corresponding to the current operation of the tool 223 to the diagnostic apparatus 100.

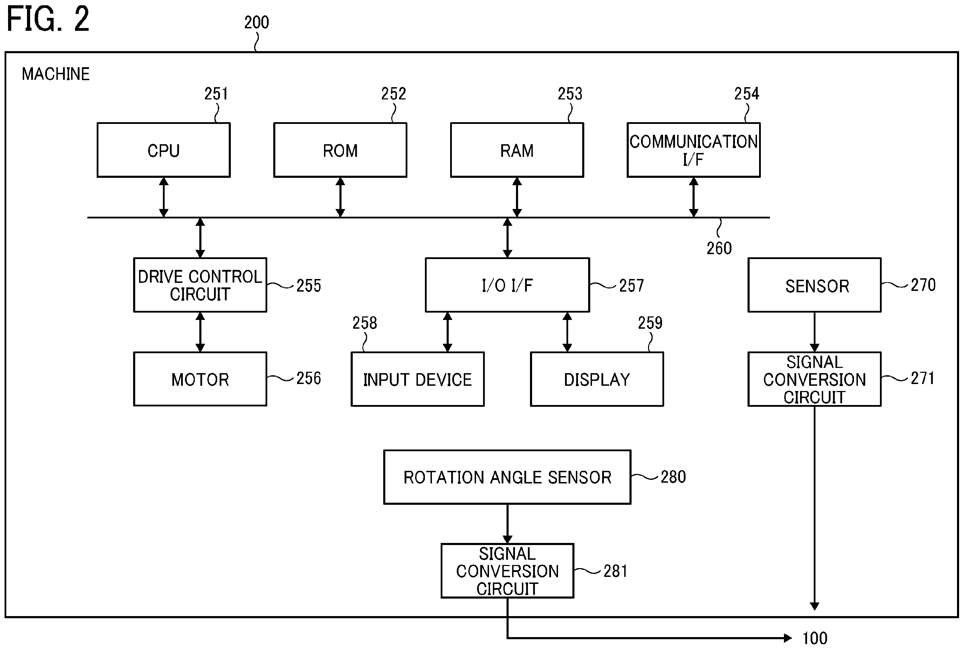

The machining system further includes a physical quantity information detector 227 that is implemented by a sensor (e.g., a sensor 270 in FIG. 2) and a signal conversion circuit 271 (in FIG. 2). The sensor detects, as an analog signal, a time-varying physical quantity generated when the tool 223 rotates during execution of a machining operation on the workpiece 224. The physical quantity information detector 227 provides a function (e.g., implemented by a circuit) of amplifying an analog signal detected by the sensor as appropriate, cutting freely selected frequency range, and then converting the analog signal into a digital signal. The physical quantity information detector 227 also functions as an example of a transmitting unit that transmits the digital signal to the diagnostic apparatus 100 as detection result. The type of the sensor included in the physical quantity information detector 227 and the physical quantity to be detected may be of any type. For example, the sensor included in the physical quantity information detector 227 is a microphone, an accelerometer, or an acoustic emission (AE) sensor, and outputs acoustic data, acceleration data, or data indicating an AE wave as detection result. In addition, the number of the physical quantity information detectors 227 included in the diagnostic apparatus 100 is not limited, and the diagnostic apparatus 100 may include a plurality of physical quantity information detectors 227. For example, the diagnostic apparatus 100 may include a plurality of sensors that detect different types of physical quantities.

In FIG. 1, the physical quantity information detector 227 includes the sensor mounted on a side face of a structure that holds the spindle 221. The sensor of the physical quantity information detector 227 incorporates an accelerometer. When the machine 200 starts machining, the physical quantity information detector 227 detects the acceleration of the vibration generated by the rotation of the spindle 221. In the machine 200, when the tool 223 contacts the workpiece 224 to start actual cutting, a cutting force is generated. The cutting force serves as an excitation force to vibrate the tool 223 and the workpiece 224, and the vibrations propagate to each other. The physical quantity information detector 227 transmits the acceleration or the like of the vibration to the diagnostic apparatus 100 as a detection result.

In the present embodiment, when the machining program is started, first, the machine 200 starts rotating the spindle 221 idles until the rotation speed reaches a set value, and, at such a timing, moves the spindle 221 with the Z-axis stage 226 to the workpiece 224, and starts machining with the spindle 221 in contact with the workpiece 224. The physical quantity information detector 227 transmits the vibration signal acquired during idling to the communication control unit 101 of the diagnostic apparatus 100.

In the machine 200, the cutting forces of the cutting edges are uniform during normal machining. For example, when the cutting edge of the tool 223 is broken or chipped during machining, the cutting forces of the cutting edges are uneven, causing a change in the generated vibrations. Alternatively, in the machine 200, when chips are mixed between the tool holder 222 and the spindle 221 at the time of replacement of the tool 223, whirling (runout) of the cutting edge at the tip of the tool 223 with respect to the rotation axis increases. As a result, the cutting amount per cutting edge of the tool 223 becomes uneven, and the uneven cutting force causes a vibration change similar to the case where the cutting edge is damaged.

The diagnostic apparatus 100 receives the detection result on the vibration with the communication control unit 101. The communication control unit 101 controls communication with the machine 200 and further receives the context information from the machine 200. The determining unit 102 refers to the context information and the detection result and determines whether or not the machining state of the machine 200 is normal. In response to determining that the machining state of the machine 200 is abnormal, the diagnostic apparatus 100 transmits alert information to the machine 200 via the communication control unit 101. In response to receiving, by the communication control unit 205, of the alert information, the machine 200 displays the alert information on the display unit 203 or activates the alarm 208. The alarm 208 is, for example, a patrol lamp, a buzzer, or a speaker. In addition, the machine controller 201 can interrupt the operation of the machine 200 according to the machining program, so as to stop the machining of the machine 200.

The machining system further includes a spindle rotation information acquisition unit 228 that acquires rotation angle information when the tool 223 rotates and transmits the rotation angle information to the communication control unit 101 of the diagnostic apparatus 100. The spindle rotation information acquisition unit 228 is implemented by a rotation angle sensor 280 (see FIG. 2) attached to the spindle 221 and a signal conversion circuit 281 (see FIG. 2).

FIG. 2 is a block diagram illustrating a hardware configuration of the machine according to the present embodiment. As illustrated in FIG. 2, the machine 200 according to the present embodiment includes a central processing unit (CPU) 251, a read only memory (ROM) 252, a random access memory (RAM) 253, a communication interface (I/F) 254, a drive control circuit 255, a motor 256 (servo motor), an input/output (I/O) I/F 257, an input device 258, and a display 259, which are connected via a bus 260.

The CPU 251 controls the entire operation of the machine 200. The CPU 251 executes a program stored in the ROM 252 or the like using, for example, the RAM 253 as a work area, to control the entire operation of the machine 200 and implement various functions of the machine 200.

The communication I/F 254 is an interface for communicating with external devices such as the diagnostic apparatus 100. The drive control circuit 255 is a circuit that controls the drive of the motor 256. Each of the spindle 221, the Z-axis stage 226, and the XY-axes stage 225 includes a driver such as the motor 256. The sensor 270 is attached to the machine 200 and converts, into an electrical signal, a physical quantity that changes in accordance with the operation of the machine 200. The signal conversion circuit 271 amplifies the electric signal output from the sensor 270 to a desired magnitude, cuts a noise component included in the electric signal, and converts the electric signal into a digital signal. Then, the signal conversion circuit 271 outputs the digital signal to the diagnostic apparatus 100 as a detection result. That is, the sensor 270 and the signal conversion circuit 271 correspond to, for example, the physical quantity information detector 227 illustrated in FIG. 1.

The numerical control unit 206 and the communication control unit 205 illustrated in FIG. 1 may be implemented by the CPU 251 executing a program stored in by the ROM 252, that is, by software. Alternatively, the numerical control unit 206 and the communication control unit 205 may be implemented by hardware such as an integrated circuit (IC), or may be implemented by a combination of software and hardware.

The rotation angle sensor 280 is attached to the machine 200 and converts, into an electrical signal, a physical quantity that changes in accordance with the rotation angle of the spindle 221. The signal conversion circuit 281 amplifies the electric signal output from the rotation angle sensor 280 to a desired magnitude, cuts a noise component included in the electric signal, and converts the electric signal into a digital signal. Then, the signal conversion circuit 281 outputs the digital signal to the diagnostic apparatus 100 as a detection result. That is, the rotation angle sensor 280 and the signal conversion circuit 281 correspond to, for example, the spindle rotation information acquisition unit 228 illustrated in FIG. 1.

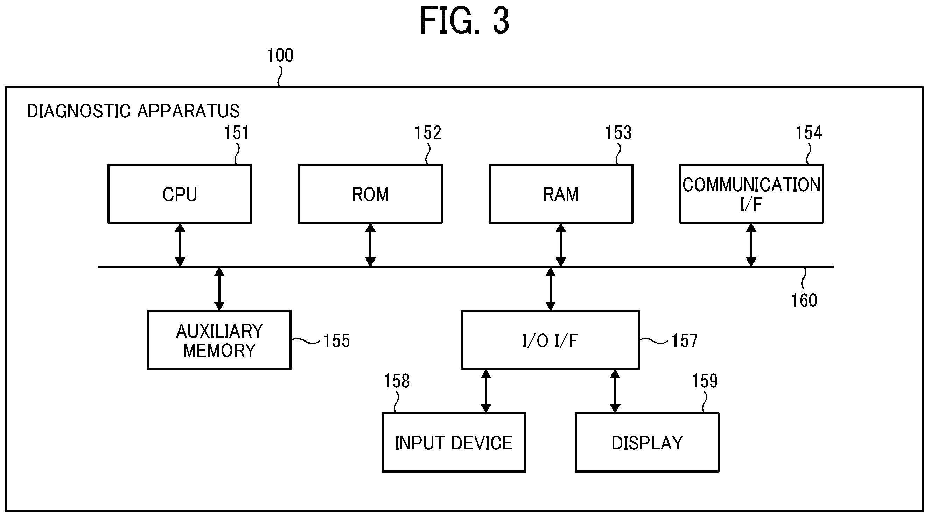

FIG. 3 is a block diagram illustrating a hardware configuration of the diagnostic apparatus according to the present embodiment. As illustrated in FIG. 3, the diagnostic apparatus 100 according to the present embodiment includes a CPU 151, a ROM 152, a RAM 153, a communication I/F 154, an auxiliary memory 155, and an I/O I/F 157, which are connected via a bus 160.

The CPU 151 controls the entire operation of the diagnostic apparatus 100. The CPU 151 executes a program stored in the ROM 152 or the like using, for example, the RAM 153 as a work area, to control the entire operation of the diagnostic apparatus 100 and implement various diagnostic functions of the machine 200.

The communication I/F 154 is an interface for communicating with external devices such as the machine 200. The auxiliary memory 155 stores various information such as setting information of the diagnostic apparatus 100, the context information received from the machine 200, and the detection result output from the physical quantity information detector 227. The auxiliary memory 155 stores various calculation results used for determining whether the machining state of the machine 200 is normal. The auxiliary memory 155 includes a nonvolatile memory such as a hard disk drive (HDD), an electrically erasable programmable read-only memory (EEPROM), or a solid state drive (SSD).

The I/O I/F 157 sequentially displays, on a display 159, the detection result input from the physical quantity information detector 227 or the determination result by the determining unit 102. The I/O I/F 157 receives settings necessary for diagnosis of the machine 200. The user inputs such settings via an input device 158, such as a keyboard or a mouse, while viewing the display 159.

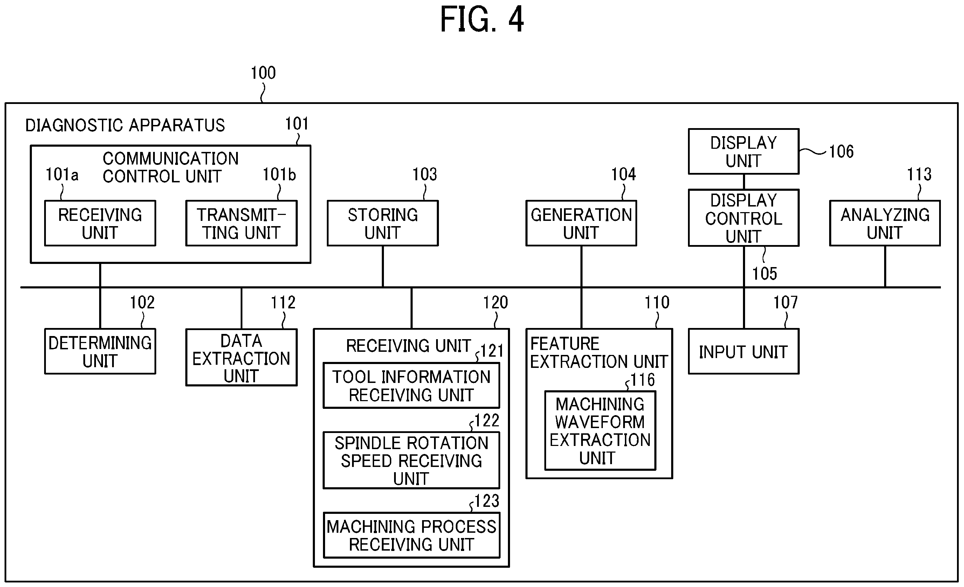

FIG. 4 is a block diagram illustrating an example of a functional configuration of the diagnostic apparatus according to the present embodiment. In addition to the above-described communication control unit 101 and the determining unit 102, the diagnostic apparatus 100 according to the present embodiment includes a storing unit 103, a generation unit 104, a display control unit 105, a display unit 106, an input unit 107, a feature extraction unit 110, a data extraction unit 112, an analyzing unit 113, and a receiving unit 120. The feature extraction unit 110 includes a machining waveform extraction unit 116. The receiving unit 120 includes a tool information receiving unit 121, a spindle rotation speed receiving unit 122, and a machining process receiving unit 123.

The storing unit 103 stores various kinds of information for the diagnostic function of the diagnostic apparatus 100. The storing unit 103 is implemented by any desired memory, for example, one or both of the RAM 153 and the auxiliary memory 155 illustrated in FIG. 3. For example, the storing unit 103 stores one or more models (hereinafter referred to as learned models) used for determination of abnormality in the machining state of the machine 200. The learned model is generated by learning of the detection result output from the physical quantity information detector 227, for example, when the machining state of the machine 200 is normal. The learning method of the learned model and the format of the learned model may be any method and any format. For example, a learned model such as a Gaussian mixture model (GMM), a hidden Markov model (HMM), one-class support vector machine (SVM), or a two-class SVM, and a model learning method corresponding to such a learned model can be applied to the present embodiment. As a simple method, determination may be made by simple threshold value comparison, using a one-dimensional scalar value as an index value.

The storing unit 103 may further store rules of a normal machining state or an abnormal machining state of the machine 200 as a learned model. For example, the rule stored in the storing unit 103 as the learned model specifies that the first ten times of machining started after attachment of a new tool 223 is a learning period for determining a rule for diagnosis. The rule to be stored as the learned model in the storing unit 103 may be determined in advance separately from actual machining, and the determined rule may be stored as the learned model in the storing unit 103.

In the present embodiment, the learned model stored in the storing unit 103 is generated for each context information. The storing unit 103 stores, for example, the context information and a learned model corresponding to the context information in association with each other. In the present embodiment, the learned model is generated for each combination of the tool type or the number of an automatic changer of the machine tool, and the spindle rotation speed at the time of model generation, and is stored in the storing unit 103.

Returning to FIG. 4, the communication control unit 101 includes a receiving unit 101a and a transmitting unit 101b. The receiving unit 101a receives various kinds of information transmitted from the machine 200 or an external apparatus. For example, the receiving unit 101a receives the context information corresponding to the current operation of the tool 223, the detection result output from the physical quantity information detector 227, and rotation angle information output from spindle rotation information acquisition unit 228. The transmitting unit 101b transmits various kinds of information to the machine 200.

For example, the receiving unit 101a receives, as context information corresponding to the current operation of the machine tool 220, the number of the mounted tool 223, the setting value of the spindle rotation speed, a stage drive signal of the machine tool 220, a spindle rotation start signal, and a spindle stop start signal.

The feature extraction unit 110 generates a learned model and extracts feature information (feature value) used for determination by the determining unit 102 from the detection result. The feature information may be any information indicating a feature of the detection result. For example, when the detection result is acoustic data collected by a microphone, the feature extraction unit 110 extracts a feature value such as energy, a frequency spectrum, or mel-frequency cepstrum coefficients (MFCC) from the detection result.

The generation unit 104 generates a learned model for determining the normal machining state of the machine 200 by learning of the feature information extracted from the detection result in the normal machining state of the machine 200. However, when the learned model is generated by an external device, the diagnostic apparatus 100 may not include the generation unit 104. To be specific, in another embodiment, an external device generates the learned model, and the learned model generated by the external device is received by the receiving unit 101a and stored in the storing unit 103. When context information for which a learned model is not defined and detection result corresponding to the context information are input, the generation unit 104 may generate a learned model corresponding to the context information using feature information extracted from the detection result.

The determining unit 102 determines the machining state of the machine 200 using the feature information extracted from the detection result. Specifically, the rotation state of the tool 223 is determined based on the detection result and the rotation angle information. In the present embodiment, the determining unit 102 determines the machining state of the machine 200 using the feature information and the learned model corresponding to the context information. For example, the determining unit 102 requests the feature extraction unit 110 to extract feature information from the detection result. The determining unit 102 calculates a likelihood that the feature information extracted from the detection result is normal, using the corresponding learned model. The determining unit 102 compares the likelihood with a threshold value. When the likelihood is equal to or greater than the threshold, the determining unit 102 determines that the machining state of the machine 200 is normal. When the likelihood is less than the threshold value, the determining unit 102 determines that the machining state of the machine 200 is abnormal.

The method for determining the machining state of the machine 200 is not limited thereto. The determining unit 102 may use any method that can determine the machining state of the machine 200 using the feature information and the model. For example, instead of directly comparing the likelihood with the threshold value, the determining unit 102 may compare a value indicating a change in the likelihood with a threshold value, thereby determining whether or not the machining state of the machine 200 is normal. Alternatively, the determining unit 102 calculates a score that is a positive numerical value equal to or greater than 0, obtained by taking the logarithm of the likelihood and inverting the sign. Such a score is close to 0 when the machining state of the machine 200 is normal. The score increases as the abnormality degree of the machining state of the machine 200 increases. Therefore, the determining unit 102 determines that the machining state of the machine 200 is normal when the score is not equal to or smaller than (or smaller than) a threshold. The determining unit 102 determines that the machining state of the machine 200 is abnormal when the score is greater than (or equal to or greater than) the threshold value. That is, the determining unit 102 determines the machining state of the machine 200 by comparing at least one of the likelihood and a value calculated using the likelihood with the threshold value.

Each unit (the communication control unit 101, the determining unit 102, the feature extraction unit 110, and the generation unit 104) illustrated in FIG. 4 may be implemented by the CPU 151 illustrated in FIG. 3 executing a program, that is, by software. These units may be implemented by hardware such as an IC or by a combination of software and hardware.

The data extraction unit 112 extracts, from a detection result received by the communication control unit 101, a detection result corresponding to a time determined based on the rotation angle information. The determining unit 102 determines the rotation state of the tool 223 based on the extracted detection result by the data extraction unit 112.

The analyzing unit 113 performs Fourier transform on the detection result extracted by the data extraction unit 112.

The determining unit 102 determines the rotation state of the tool 223 based on a reference value determined based on the complex number, which is obtained by Fourier transform performed by the analyzing unit 113 on the detection result extracted by the data extraction unit 112.

Next, the operation of the diagnostic apparatus 100 according to the present embodiment will be described in detail with reference to FIGS. 1, 2, and 4. In the present embodiment, in the machine 200, the physical quantity information detector 227 (see FIG. 1) is disposed near the spindle 221, and the physical quantity information detector 227 includes an accelerometer as the sensor 270 (see FIG. 2). The physical quantity information detector 227 amplifies an analog signal detected by the sensor 270 by a preamplifier of the sensor 270. The physical quantity information detector 227 performs sampling at set time intervals, and converts the sampled analog signal into a digital signal with an analog/digital (A/D) converter (the signal conversion circuit 271). The diagnostic apparatus 100 receives, with the receiving unit 101a, the digital signal output from the physical quantity information detector 227 as a detection result. The digital signal output from the physical quantity information detector 227 may be converted in a unit of acceleration by the calibration value of the sensor 270 as desired. In this specification, a description of such processing is omitted, and the digital signal is described as being independent of the sensitivity of the sensor 270 or the specification of the A/D converter (signal conversion circuit 271). Therefore, the receiving unit 101a receives, as the detection result, the waveform in the time domain of the observed value proportional to the acceleration detected by the sensor 270 of the physical quantity information detector 227.

In one example, the machine 200 forms a rough hole having a depth of 5.0 mm in an aluminum alloy plate with a drill having a radius of 8.2 mm, and then performs contouring by rotating a four-edge end mill having a radius of 8.0 mm at 7500 rpm. The contouring is divided into three steps, and the cutting depth in the radial direction of the tool 223 is set to 100.0 micrometer, 200.0 micrometer, and 32.0 micrometer, respectively. The XY-axes stage 225 performs the rotation so as to widen the diameter of the rough hole at this cutting depth. At this time, the machine 200 rotates the XY-axes stage 225 at 90.0 mm/min in the same direction as the rotation direction of the spindle 221.

The receiving unit 120 of the diagnostic apparatus 100 requests the machine 200 to transmit the context information from each of the spindle rotation speed receiving unit 122, the tool information receiving unit 121, and the machining process receiving unit 123. The context information is transmitted and received via the communication control unit 205 and the communication control unit 101. The context information mentioned here includes rotation information, machining process information, and tool identification information.

The rotation information may be either the spindle rotation speed set from the machining program read by the machine 200 or the spindle rotation speed measured by a tachometer in the machine 200. The rotation information is, for example, revolutions per minute (e.g., 7500 rpm) set from the machining program. The machining process information includes a number identifying a machining process described in the machining program, and information about start and end of the operation of the spindle 221 and the stages (the XY-axes stage 225 and the Z-axis stage 226). The machining process information is, for example, information on start and end of the rotation of the XY-axes stage 225. The tool identification information includes a tool type, a diameter, and the number of edges. However, the tool identification information is not limited to the context information from the machine 200. The context information may be context information input from the input device 158 to the diagnostic apparatus 100, context information stored in the auxiliary memory 155, or context information received from an external device other than the machine 200 through the receiving unit 101a. The tool identification information is, for example, the number of edges (for example, four) of the tool 223.

The machining waveform extraction unit 116 of the feature extraction unit 110 extracts, from the detection result, such as waveform data of acceleration (acceleration waveform data) input from the physical quantity information detector 227. Specifically, the feature extraction unit 110 extracts waveform data during machining (also referred to as "in-machining waveform data"), for each cutting depth of the tool 223, in time sections respectively corresponding to three machining times of rotation of the XY-axes stage 225, start of rotation thereof, and end of rotation thereof. The analyzing unit 113 performs frequency analysis on the detection result. The analyzing unit 113 performs a Fourier transform, for example, using a fast Fourier transform (FFT) algorithm, on a predetermined number of samples among the extracted in-machining waveform data. The predetermined number may be empirically obtained and stored in a memory. The entire data string of the in-machining waveform data to be subjected to the Fourier transform may be constructed from the extracted in-machining waveform data, or a part of the data string may be replaced with 0. However, the machining waveform extraction unit 116 determines frequency resolution which can be analyzed by Fourier transform based on the time interval of sampling of the detection result (acceleration waveform data) before the A/D conversion by the signal conversion circuit 271 and the data length (the number of data of data string) of the detection result. The present embodiment is described on the assumption that the combination of the time interval and the data length is set so that the frequency resolution is about 5.8 Hz.

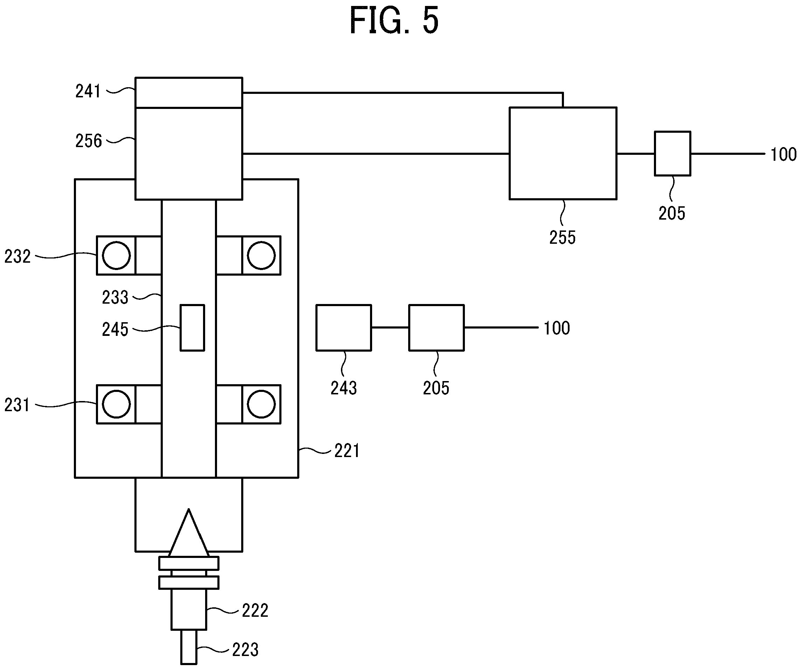

FIG. 5 is a diagram illustrating an example of the rotation angle sensor according to the present embodiment. On the spindle 221, a spindle shaft 233 is rotatably supported by a first bearing 231 and a second bearing 232. One end of the spindle shaft 233 holds a taper shank of the tool holder 222. The other end of the spindle shaft 233 is coupled to the motor 256 (servo motor). The motor 256 reads the rotation angle with an encoder 241, and the rotation angle is input to a drive control circuit 255. The drive control circuit 255 calculates a rotation speed from rotation angle information according to a command from the machine controller 201, and controls the rotation speed of the motor 256. When detecting a zero position of the spindle rotation information from the drive control circuit 255, the communication control unit 205 transmits a rectangular signal to the diagnostic apparatus 100. In the above description, the encoder 241 corresponds to the rotation angle sensor 280.

The spindle shaft 233 includes a reflection part 245. An optical sensor 243 is mounted at a position facing a side face of the spindle shaft 233. The position is for irradiating the reflection part 245. The optical sensor 243 includes a light-receiving element to receive reflected light from the reflection part 245. The optical sensor 243 transmits a rectangular signal corresponding to the reflection intensity to the diagnostic apparatus 100 via the communication control unit 205. In the above description, the optical sensor 243 corresponds to the rotation angle sensor 280.

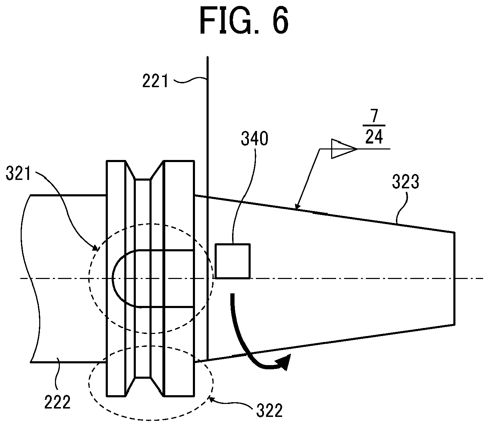

FIG. 6 is a side view of the spindle according to the present embodiment. The spindle 221 includes an interface with a BT30 tool that is a 7/24 taper shank (a taper shank 323). The tool holder 222 has a key groove 321 and a V-flange 322. The total weight of the tool holder 222 including the cutting tool attached thereto is about 600 g. The tool holder 222 is attached to the spindle 221 and rotates at a speed of 9000 revolutions per minute (rpm) as idle rotation. Using this spindle 221, a simulation was performed. In the simulation, as an imitation of a chip, a square tape 340 of about 10 mm, cut out from a tape having a thickness of about 20 $\mu$m, was attached to the taper shank 323, to increase runout. Further, the position at which the tape 340 was attached was changed along the circumference (direction of arc of the taper shank 323.

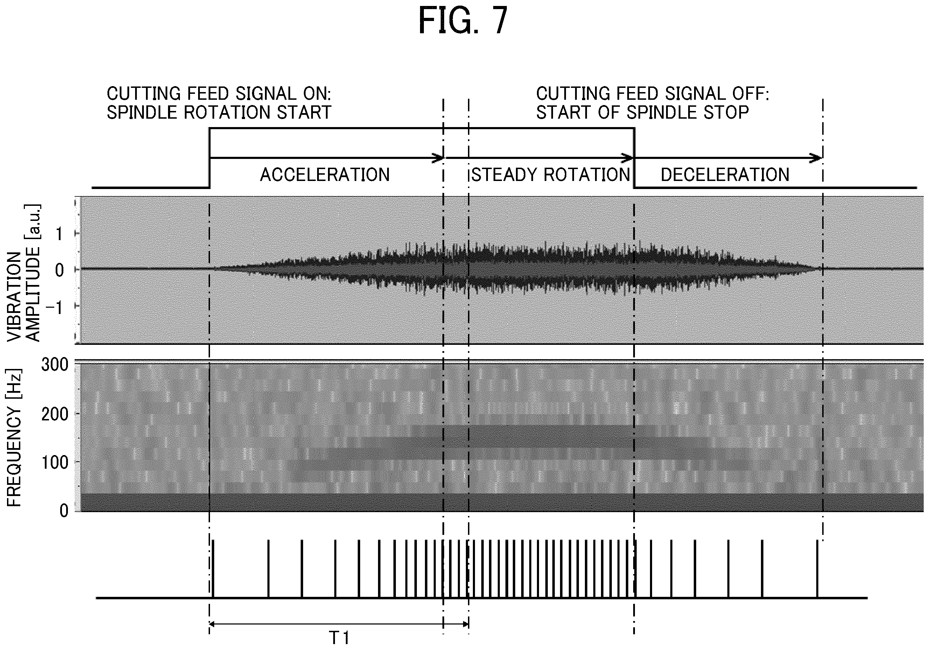

FIG. 7 is a diagram illustrating detection results and rotation angle information received by the receiving unit according to the present embodiment.

The receiving unit 101a of the diagnostic apparatus 100 receives a vibration signal as an example of the detection result and a spindle rotation signal as an example of the rotation angle information. FIG. 7 includes three graphs. The upper graph illustrates the vibration signal, and the lower graph illustrates the spindle rotation signal. The middle graph illustrates, for reference, a spectrogram obtained by performing Fourier transform on the vibration signal at predetermined time intervals. FIG. 7 further includes, above the upper graph of the vibration signal, a rectangular wave corresponding to information of spindle rotation start and start of spindle stop, acquired by the receiving unit 101a. When the spindle 221 (see FIG. 6) starts rotating, the vibration amplitude increases. In the spectrogram, a frequency component having a large amplitude shifts to a high frequency side and reaches a steady rotation. The diagnostic apparatus 100 performs diagnosis during the steady rotation. When the diagnostic apparatus 100 diagnoses the rotation as normal, the machine 200 proceeds to machining. Note that, although the spindle 221 is stopped in this example, in actual production, rotation is not stopped, but the rotation speed is changed to the rotation speed for machining, and machining is started. When diagnosing the rotation as abnormal, the diagnostic apparatus 100 transmits a spindle stop command to the machine 200. The lower graph of the spindle rotation signal illustrates a rise of a pulsed rectangular wave that is input when the rotation angle of the spindle 221 reaches zero position. The pulse interval gradually decreases during acceleration from the rotation start and becomes constant during steady rotation.

In FIG. 7, the spindle 221 reaches a predetermined steady rotation after elapse of a time T1 from the spindle rotation start. The data extraction unit 112 illustrated in FIG. 4 extracts (clips) the number of frames to be input to the Fourier transform, from a vibration waveform after the time T1, using the spindle rotation angle zero position signal in the lower graph as a trigger. Such extraction is sequentially performed by using, as triggers, zero position signals in the vicinity of reference time intervals set in advance. The extracted signal is subjected to Fourier transform by the analyzing unit 113. From the analysis result, the feature extraction unit 110 extracts a frequency bin value corresponding to the spindle rotation speed. A plurality of feature values may be combined from a component of the rotation speed [rpm]/60, a frequency bin including a harmonic component thereof, and adjacent frequency bins of the frequency bin including the harmonic component. Alternatively, a continuous wide band bin including the rotation speed component and a harmonic component thereof may be used.

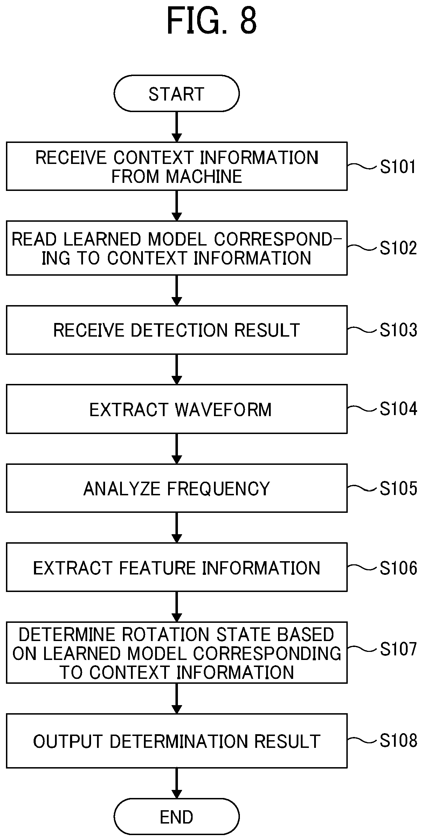

FIG. 8 is a flowchart illustrating an example of an overall diagnostic operation performed by the diagnostic apparatus according to the present embodiment. The numerical control unit 206 of the machine 200 sequentially transmits context information indicating the current operation of the tool 223 to the diagnostic apparatus 100. The receiving unit 101a receives the context information transmitted from the machine 200 (step S101). In S102, the feature extraction unit 110 reads the learned model corresponding to the received context information from the storing unit 103.

The physical quantity information detector 227 of the machine 200 sequentially outputs detection result during machining operation of the machine 200. The receiving unit 101a receives the detection result (sensor data) and rotation angle information transmitted from the machine 200 (step S103). The data extraction unit 112 extracts, from the received detection result, a detection result at a time determined based on the rotation angle information (step S104). In step S105, the analyzing unit 113 performs frequency analysis of the in-machining waveform data using an FFT algorithm or the like. The frequency analysis is performed on the preset number of data samples in the in-machining waveform data while shifting the start position of the data string. The number of data samples may be empirically obtained by the manufacturer or the operator of the diagnostic apparatus 100 and stored in a memory. The frequency analysis on the in-machining waveform data generates, as a result, data having a three dimensional structure in which plural spectra are arranged in time series. The feature extraction unit 110 extracts feature information from an average spectrum obtained by averaging the plural spectra or by averaging the plural spectra in a desired time range (step S106).

The determining unit 102 determines the machining state of the machine 200 using the feature information extracted by the feature extraction unit 110 and the learned model corresponding to the received context information (step S107). The machining state determined is, for example, whether vibration relating to runout or unbalance is normal or abnormal. Thus, the diagnostic apparatus 100 determines the machining state of the machine 200 using the feature information and the learned model extracted according to the tool 223 or the type of machining. This enables reliable detection and monitoring of the occurrence of an abnormality in the machining state of the machine 200, without erroneous detection, for various types of machining performed in the machining center. The determining unit 102 outputs the determination result to the display unit 106 via the display control unit 105 (step S108). Alternatively, the determining unit 102 transmits the alert information to the machine 200 or an external apparatus via the transmitting unit 101b (step S108).

In step S103, the receiving unit 101a further receives tool identification information (rotator identification information) identifying the tool 223. In this case, in step S107, the determining unit 102 determines the rotation state of the tool 223 based on the detection result, the rotation angle information, and a reference value that is individually set for each tool 223 identified by the tool identification information. The reference value for each tool 223 may be set to a different value.

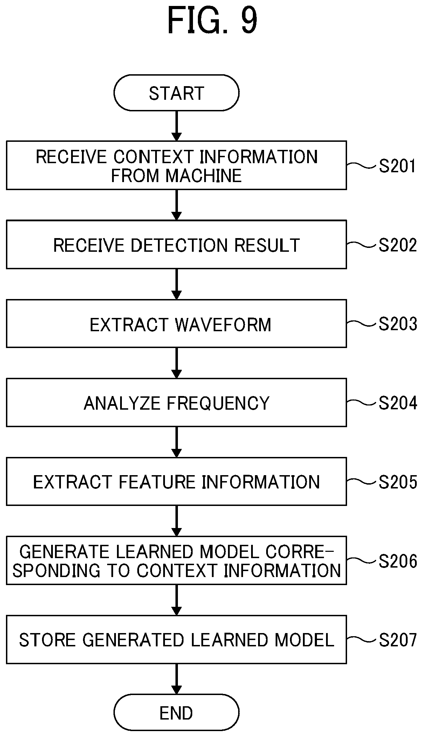

Next, an example of model generation operation by the diagnostic apparatus 100 according to the present embodiment will be described with reference to FIG. 9. FIG. 9 is a flowchart illustrating an example of the sequence of the model generation operation by the diagnostic apparatus according to the present embodiment. In the present embodiment, for example, the generation unit 104 executes model generation before diagnosis of the machine 200. Alternatively, as described above, the generation unit 104 may execute the model generation in response to input of the context information for which a learned model is not defined. Alternatively, as described above, when an external device generates the learned model, model generation by the diagnostic apparatus 100 is omitted.

The receiving unit 101a receives the context information transmitted from the machine 200 (step S201). The receiving unit 101a receives the detection result (sensor data) and rotation angle information transmitted from the machine 200 (step S202).

The context information and the detection result received in this manner are used to generate a learned model. In the present embodiment, since the generation unit 104 generates the learned model for each context information, the detection result is to be associated with the corresponding context information. Therefore, for example, the receiving unit 101a temporarily stores the received detection result in the storing unit 103 or the like in association with the context information received at the same time or corresponding time. Then, the generation unit 104 confirms that the detection result stored in the storing unit 103 is information at the normal time, and generates the learned model using the detection results at the normal time. That is, the generation unit 104 generates the learned model using the detection result labeled as normal.

The confirmation (labeling) of whether or not the detection result is normal may be performed at any timing after the detection result is stored in the storing unit 103 or the like, or may be performed in real time while the machine 200 is operated. Alternatively, without labeling the detection result, the generation unit 104 may generate the learned model on the assumption that the detection result is normal. In the case where the detection result assumed to be normal is actually abnormal detection result, whether the machining state of the machine 200 is normal is not correctly determined by the generated learned model. Therefore, whether the learned model is generated using the abnormal detection result can be determined based on, for example, the frequency of determining that the machining state of the machine 200 is abnormal. Then, the learned model erroneously generated can be deleted, for example. Alternatively, a learned model generated by using abnormal detection result may be used as a learned model for determining abnormality.

The data extraction unit 112 extracts, from the received detection result, a detection result (in-machining waveform data) at a time determined based on the rotation angle information (step S203). In step S204, the analyzing unit 113 performs frequency analysis of the extracted in-machining waveform data using an FFT algorithm or the like. The analyzing unit 113 performs frequency analysis on the preset number of data samples in the in-machining waveform data while shifting the start position of the data string. The obtained frequency analysis result is data of a three dimensional structure in which plural spectra are arranged in time series. The feature extraction unit 110 extracts feature information from an average spectrum obtained by averaging the plural spectra or by averaging plural spectra in a desired time range according to band pass filter (BPF) (step S205). This method will be described in detail later.

The generation unit 104 generates a learned model corresponding to the context information by using the feature information extracted from the detection result associated with the same context information (step S206). The generation unit 104 stores the generated learned model in the storing unit 103 (step S207).

In step S206, the generation unit 104 generates a learned model based on the detection result and the rotation angle information. Specifically, the generation unit 104 generates the learned model based on the extracted detection result at the time determined based on the rotation angle information. The extracted detection result is extracted by the data extraction unit 112 from the detection result received by the receiving unit 101a.

In this case, the determining unit 102 determines the rotation state of the tool 223 based on a reference value in the learned model determined based on the complex number, which is obtained by Fourier transform performed by the analyzing unit 113 on the detection result extracted by the data extraction unit 112.

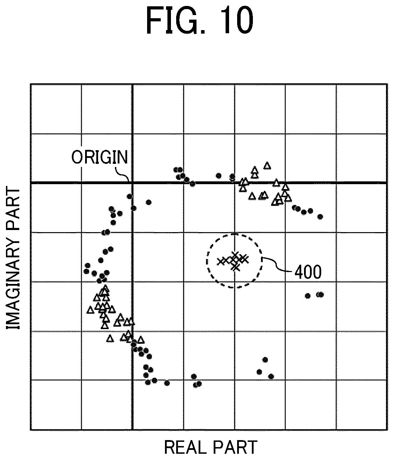

FIG. 10 is a chart illustrating a complex plane plotted with complex numbers that are obtained by Fourier transform on the detection result according to the present embodiment.

As described above, the detection result is extracted using the spindle rotation information as a trigger, and subjected to Fourier transform. From the complex numbers thus obtained, frequency bin values including frequency components of the spindle rotation speeds are plotted on the complex plane.

In FIG. 10, data X are obtained in normal states in which the tape 340 is not attached to the taper shank 323 in FIG. 6. When the balance adjustment is carefully performed, the amplitude of the normal data X decreases. However, in a machine tool using a plurality of tools, it is very time-consuming to uniformly perform balance adjustment of all tools. To avoid such time-consuming balance adjustment, an expensive holder having a balance adjusting function is used, which is undesirable. However, in an actual industrial site, an imbalance is allowed in the machining as long as a target machining accuracy is obtained. Therefore, the normal data X are plotted at positions shifted from the origin of the complex plane.

In FIG. 10, a threshold value circle 400 represented by a broken circle is set from the normal data. The threshold value circle 400 consists of the center and the radius thereof. The inside of the circle is diagnosed as normal, and the outside is diagnosed as abnormal.

On the other hand, black dots and triangles plotted in FIG. 10 are data obtained with the taper shank 323 to which the tape 340 is attached. Measurement was performed while the position of the tape 340 was sequentially shifted from the position illustrated in FIG. 6 in the rotation direction. Such data are located outside the threshold value circle 400. Additionally, the runout of the cutting edge becomes large because of the tape 340, causing defective machining.

In the diagnostic program, when coordinates of a threshold center are expressed as (Xs,Ys), a threshold radius is expressed as rs, and coordinates of any of measurement data are expressed as (Xm,Ym), abnormality diagnosis expression is as follows.

$$(Xm-Xs)^2 + (Ym-Ys)^2 > rs^2 \cdots\cdots\cdots\cdots \text{Expression 1}$$

When the complex plane graph of FIG. 10 is displayed for each tool on the display 159 (see FIG. 3) of the diagnostic apparatus 100, the degree of variation of normal data is known, and the threshold value can be updated to a more practical threshold value.

A description is given below of another example (second example) of the determination method for abnormality.

From values obtained by Fourier transform, a plurality of frequency bins, such as frequency bins including a spindle rotation speed [rpm]/60 component, frequency bins including the harmonic component thereof, and frequency bins therearound, is selected. Then, learning of one class support vector machine (SVM) using such multidimensional feature information is performed, and abnormality is determined by outlier detection.

A description is given below of another example (third example) of the determination method for abnormality.

The normal model learned by FIG. 10 is read from the storing unit 103 in S102 of FIG. 8. As described above, the model may be, for example, a probability density function P(X) such as a Gaussian mixture model (GMM). In the function, X is a feature value extracted according to the BPF setting at the time of learning. The feature value is assumed to be n-dimensional (X = {x1, x2, ... xn}). The BPF setting is stored together with this model, and, in S106 of FIG. 8, the feature value is extracted using this BPF setting.

In S107 of FIG. 8, when the likelihood obtained by inputting the feature value to the probability density is equal to or greater than a preset threshold value, the machining state is determined as normal. When the likelihood is less than the threshold value, the machining state is determined as abnormal. Alternatively, as expressed in Equation 2 below, a value obtained by reversing the sign of the logarithm likelihood is defined as an abnormality degree score aj, the value is sets as an index value such that the abnormality degree score increases when the abnormality is strong, and the abnormality degree score aj is obtained by the number j = 1 to J of spectra.

$$aj = -\log(P(Xj)) \quad \cdots\cdots\cdots\cdots\cdots\cdots\cdots\cdots\cdots\cdots\cdots\cdots \text{Expression 2}$$

As the total score of the abnormality degree score aj, for example, the maximum value, the average (Expression 3), or a value suitable for the tool or the machining method, of the abnormality degree scores aj, is selected by trial and error.

$$A = (\Sigma aj)/J \quad \cdots\cdots\cdots\cdots\cdots\cdots\cdots\cdots\cdots\cdots\cdots\cdots\cdots \text{Expression 3}$$

The abnormality degree score is compared with a preset threshold. When the abnormality degree score is equal to or greater than a preset threshold value, the machining state is determined as abnormal. When the likelihood is less than the threshold value, the machining state is determined as normal.

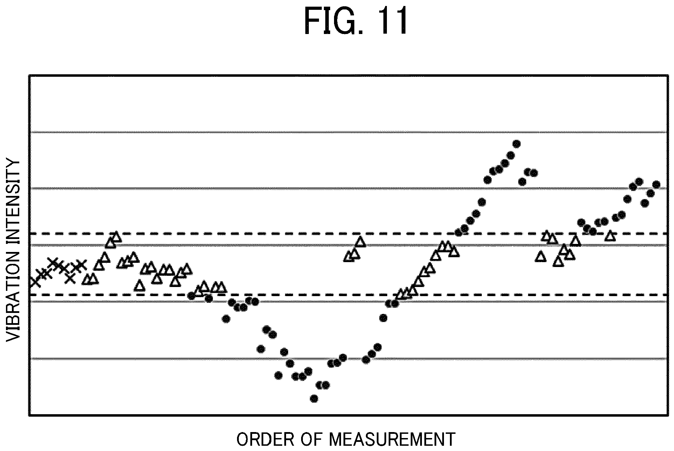

FIG. 11 is a chart illustrating a complex plane plotted with absolute values that are obtained by Fourier transform on a detection result, according to a comparative example. The vertical axis represents the vibration intensity, and the lateral axis represents the order of measurement.

In the comparative example illustrated in FIG. 11, the diagnostic index value is vibration intensity and is obtained from an absolute value of a complex number obtained by Fourier transform. The data plotted are the same as those plotted in FIG. 10. Time domain data related to vibration measured by a vibration sensor was subjected to fast Fourier transform processing, to vibration intensity, that is, amplitude. From the absolute values of the amplitude, frequency bins including 150 Hz at the rotation speed of 9000 rpm were extracted and plotted in the order of measurement. Similar to FIG. 10, data X are obtained in normal states in which the tape 340 is not attached to the taper shank 323 in FIG. 6. In FIG. 11, the broken lines indicate an upper limit threshold and a lower limit threshold for abnormality determination set from the value of data X. The threshold radius rs is added to or subtracted from the absolute value of the threshold center (Xs,Ys) in FIG. 10, thereby calculating the upper limit threshold and the lower limit threshold. The machining state is determined as normal when the value is between the upper and lower limit thresholds, and determined as abnormal when the value is out of the range.

The machining performed without the tape 340 was normal. In the state in which the tape 340 was attached, since the runout of the cutting edge increased, the machining state was defective. However, in FIG. 11, the data indicated by triangles out of the idling vibration data at the time of abnormality caused by the attached tape 340 are positioned between the upper and lower threshold values, and is erroneously diagnosed as normal.

Note that the computer programs performed in the diagnostic apparatus 100 according to the present embodiment may be preliminarily installed in a memory such as the ROM.

The program executed by the diagnostic apparatus 100 according to the present embodiment may be stored in a computer-readable recording medium, such as a compact disc read-only memory (CD-ROM), a flexible disk (FD), a compact disc recordable (CD-R), and a digital versatile disk (DVD), in an installable or executable file format, to be provided as a computer program product.

Alternatively, the computer programs executed by the diagnostic apparatus 100 according the present embodiment may be stored in a computer connected to a network such as the Internet and downloaded through the network. Alternatively, the computer programs executed in the diagnostic apparatus 100 according to the present embodiment may be provided or distributed via a network such as the Internet.

The program executed by the diagnostic apparatus 100 according to the present embodiment is in a modular configuration including the above-described units (e.g., the communication control unit 101 and the determining unit 102). As hardware, as the CPU (a processor) reads the program from the above-mentioned ROM and executes the program, the above-described functional units are loaded and implemented (generated) in a main memory.

Alternatively, each hardware of the diagnostic apparatus 100 of the present embodiment may be incorporated into the machine 200 (machine tool) so that the machine 200 has a diagnostic function and executes the above-described program.

As described above, the diagnostic apparatus 100, which is an example of a determination apparatus according to one embodiment of the present disclosure, includes the receiving unit 101a that receives a detection result of a time-varying physical quantity generated when the tool 223 (an example of a rotator attachable to and detachable from the spindle 221 as an example of a rotation shaft), and rotation angle information when the tool 223 rotates; and the determining unit 102 that determines the rotation state of the tool 223 based on the detection result and the rotation angle information. This configuration enables accurate determination of the rotation state of the tool 223.

The diagnostic apparatus 100 includes the data extraction unit 112. The detection result received by the communication control unit 101 is referred to as a first detection result. The data extraction unit 112 extracts, from the first detection result, a second detection result at a time determined based on the rotation angle information. The determining unit 102 determines the rotation state of the tool 223 based on the second detection result extracted by the data extraction unit 112.

The diagnostic apparatus 100 includes an analyzing unit 113 that performs Fourier transform on the second detection result extracted by the data extraction unit 112. The determining unit 102 compares, with a reference value, a complex number obtained by the Fourier transform by the analyzing unit 113, to determine the rotation state of the tool 223.

The receiving unit 101a further receives rotator identification information identifying the tool 223. The determining unit 102 determines the rotation state of the tool 223 based on the detection result, the rotation angle information, and a reference value that is individually set for each tool 223 identified based on the rotator identification information. The reference value for each tool 223 may be set to a different value.

The diagnostic apparatus 100 includes the generation unit 104 that generates a model based on the detection result and the rotation angle information. The determining unit 102 determines the rotation state of the tool 223 based on the detection result, the rotation angle information, and a reference value based on the model.

The generation unit 104 generates a model based on the second detection result at a time determined based on the rotation angle information, extracted by the data extraction unit 112 from the first detection result received by the receiving unit 101a.

The determining unit 102 determines the rotation state of the tool 223 based on a reference value determined based on the complex number, which is obtained by Fourier transform performed by the analyzing unit 113 on the second detection result extracted by the data extraction unit 112.

One embodiment of the present disclosure provides a determination method by the diagnostic apparatus 100. The method includes receiving, with the receiving unit 101a, a detection result of a time-varying physical quantity generated when the tool 223 rotates and rotation angle information when the tool 223 rotates, and determining, with the determining unit 102, a rotation state of the tool 223 based on the detection result and the rotation angle information. The tool 223 is attachable to and detachable from the spindle 221.

The machining system according to one embodiment of the present disclosure includes the diagnostic apparatus 100 and the machine 200 including the tool 223 that is an example of an object subjected to determination by the diagnostic apparatus 100. The machine 200 includes the communication control unit 205 serving as an example of a transmission unit that transmits the detection result and the rotation angle information to the diagnostic apparatus 100.

For example, elements and/or features of different illustrative embodiments may be combined with each other and/or substituted for each other within the scope of the present invention. Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

**Claims**

1. A determination apparatus comprising:

   a receiving unit (101a) to receive a detection result of a time-varying physical quantity generated by rotation of a rotator (223) attached to a rotation shaft (221), and rotation angle information of the rotator (223); and

a determining unit (102) to determine a rotation state of the rotator (223) based on the detection result and the rotation angle information.

2. The apparatus according to claim 1, further comprising an extraction unit (112) to extract, from a first detection result being the detection result received by the receiving unit (101a), a second detection result at a time determined based on the rotation angle information,
wherein the determining unit (102) determines the rotation state of the rotator (223) based on the second detection result.

3. The apparatus according to claim 2, further comprising an analyzing unit (113) to perform Fourier transform on the second detection result, to obtain a complex number,
wherein the determining unit (102) compares the complex number with a reference value, to determines the rotation state of the rotator (223).

4. The apparatus according to any one of claims 1 to 3,

wherein the rotator (223) is one of a plurality of rotators to be attached to the rotation shaft (221), and
wherein the receiving unit (101a) receives rotator identification information identifying the rotator (223), and
wherein the determining unit (102) determines the rotation state of the rotator (223) based on the detection result, the rotation angle information, and a reference value set for each rotator (223) identified based on the rotator identification information.

5. The apparatus according to any one of claims 1 to 4, further comprising a generation unit (104) to generate a model based on the detection result and the rotation angle information,
wherein the determining unit (102) determines the rotation state of the rotator (223) based on the detection result, the rotation angle information, and a reference value based on the model.

6. The apparatus according to claim 5, further comprising an extraction unit (112) to extract, from a first detection result being the detection result received by the receiving unit (101a), a second detection result at a time determined based on the rotation angle information,
wherein the generation unit (104) generates the model based on the second detection result.

7. The apparatus according to claim 6,
wherein the determining unit (102) determines the rotation state of the rotator (223) based on the reference value determined based on a complex number obtained by Fourier transform on the second detection result.

8. A machining system comprising:

the apparatus (100) according to any one of claims 1 to 7; and
a machine (200) including:

the rotator (223) that is a tool to perform machining on a workpiece; and
a transmitting unit (205) to transmit the detection result and the rotation angle information to the apparatus (100).

9. A determination method comprising:

receiving (S103) a detection result of a time-varying physical quantity generated by rotation of a rotator attached to a rotation shaft, and rotation angle information of the rotator; and
determining (S107) a rotation state of the rotator based on the detection result and the rotation angle information.

10. Carrier means carrying computer readable code for controlling a computer to perform the method of claim 9.

# FIG. 1

MACHINE — 200

MACHINE CONTROLLER — 201

TOOL CHANGER — 202

DISPLAY UNIT — 203

MEMORY — 204

COMMUNICATION CONTROL UNIT — 205

NUMERICAL CONTROL UNIT — 206

TOOL INFORMATION INPUT UNIT — 207

ALARM — 208

I/O UNIT — 209

220  226  228  221  222  223  227  224  225

DIAGNOSTIC APPARATUS — 100

COMMUNICATION CONTROL UNIT — 101

DETERMINING UNIT — 102

EP 4 060 436 A1

# FIG. 2

MACHINE (200)

- CPU (251)
- ROM (252)
- RAM (253)
- COMMUNICATION I/F (254)
- Bus (260)
- DRIVE CONTROL CIRCUIT (255)
- MOTOR (256)
- I/O I/F (257)
- INPUT DEVICE (258)
- DISPLAY (259)
- SENSOR (270)
- SIGNAL CONVERSION CIRCUIT (271)
- ROTATION ANGLE SENSOR (280)
- SIGNAL CONVERSION CIRCUIT (281)
- → 100

EP 4 060 436 A1

# FIG. 3

DIAGNOSTIC APPARATUS 100

CPU 151

ROM 152

RAM 153

COMMUNICATION I/F 154

AUXILIARY MEMORY 155

160

I/O I/F 157

INPUT DEVICE 158

DISPLAY 159

# FIG. 4

DIAGNOSTIC APPARATUS (100)

COMMUNICATION CONTROL UNIT (101)
- RECEIVING UNIT (101a)
- TRANSMITTING UNIT (101b)

STORING UNIT (103)

GENERATION UNIT (104)

DISPLAY UNIT (106)

DISPLAY CONTROL UNIT (105)

ANALYZING UNIT (113)

DETERMINING UNIT (102)

DATA EXTRACTION UNIT (112)

RECEIVING UNIT (120)
- TOOL INFORMATION RECEIVING UNIT (121)
- SPINDLE ROTATION SPEED RECEIVING UNIT (122)
- MACHINING PROCESS RECEIVING UNIT (123)

FEATURE EXTRACTION UNIT (110)
- MACHINING WAVEFORM EXTRACTION UNIT (116)

INPUT UNIT (107)

EP 4 060 436 A1

# FIG. 5

EP 4 060 436 A1

# FIG. 6

221

340

$\frac{7}{24}$

321

323

222

322

# FIG. 7

EP 4 060 436 A1

# FIG. 8

START

RECEIVE CONTEXT INFORMATION FROM MACHINE ~S101

READ LEARNED MODEL CORRESPONDING TO CONTEXT INFORMATION ~S102

RECEIVE DETECTION RESULT ~S103

EXTRACT WAVEFORM ~S104

ANALYZE FREQUENCY ~S105

EXTRACT FEATURE INFORMATION ~S106

DETERMINE ROTATION STATE BASED ON LEARNED MODEL CORRESPONDING TO CONTEXT INFORMATION ~S107

OUTPUT DETERMINATION RESULT ~S108

END

# FIG. 9

START

RECEIVE CONTEXT INFORMATION FROM MACHINE — S201

RECEIVE DETECTION RESULT — S202

EXTRACT WAVEFORM — S203

ANALYZE FREQUENCY — S204

EXTRACT FEATURE INFORMATION — S205

GENERATE LEARNED MODEL CORRESPONDING TO CONTEXT INFORMATION — S206

STORE GENERATED LEARNED MODEL — S207

END

# FIG. 10

# FIG. 11

Europäisches
Patentamt

European
Patent Office

Office européen
des brevets

# EUROPEAN SEARCH REPORT

Application Number

EP 22 16 2244

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/313403 A1 (KAMIYA YOHEI [JP]) 1 November 2018 (2018-11-01) * the whole document * | 1-10 | INV. G05B19/406 |
| A | US 2020/133230 A1 (GOTO SATORU [JP] ET AL) 30 April 2020 (2020-04-30) * paragraph [0030] - paragraph [0037]; figures 1, 4 * * paragraph [0102]; figure 11 * | 1-10 | |
| A | EP 3 540 548 A1 (RICOH CO LTD [JP]) 18 September 2019 (2019-09-18) * paragraph [0013] - paragraph [0034]; figure 1 * * paragraph [0071]; figure 6 * | 1-10 | |
| A | WO 2020/128813 A1 (PRIMA IND SPA [IT]) 25 June 2020 (2020-06-25) * claims 1-16 * | 1-10 | |
| A | EP 1 927 830 A2 (MATSUSHITA ELECTRIC WORKS LTD [JP]) 4 June 2008 (2008-06-04) * paragraphs [0029], [0035]; claims 1-4; figure 1 * | 1-10 | **TECHNICAL FIELDS SEARCHED (IPC)** G05B B23Q G01M |

The present search report has been drawn up for all claims

| Place of search | Date of completion of the search | Examiner |
|---|---|---|
| The Hague | 26 July 2022 | Itoafa, Alex |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 16 2244

This annex lists the patent family members relating to the patent documents cited in the above-mentioned European search report.
The members are as contained in the European Patent Office EDP file on
The European Patent Office is in no way liable for these particulars which are merely given for the purpose of information.

26-07-2022

| Patent document cited in search report | | Publication date | Patent family member(s) | | Publication date |
|---|---|---|---|---|---|
| US 2018313403 | A1 | 01-11-2018 | CN 108788923 A | | 13-11-2018 |
| | | | DE 102018109628 A1 | | 06-12-2018 |
| | | | JP 6408063 B1 | | 17-10-2018 |
| | | | JP 2018187703 A | | 29-11-2018 |
| | | | US 2018313403 A1 | | 01-11-2018 |
| US 2020133230 | A1 | 30-04-2020 | CN 110419012 A | | 05-11-2019 |
| | | | EP 3596568 A1 | | 22-01-2020 |
| | | | JP 7085370 B2 | | 16-06-2022 |
| | | | JP 2018156652 A | | 04-10-2018 |
| | | | US 2020133230 A1 | | 30-04-2020 |
| EP 3540548 | A1 | 18-09-2019 | CN 110260913 A | | 20-09-2019 |
| | | | EP 3540548 A1 | | 18-09-2019 |
| | | | JP 2019159728 A | | 19-09-2019 |
| WO 2020128813 | A1 | 25-06-2020 | EP 3899675 A1 | | 27-10-2021 |
| | | | US 2022066437 A1 | | 03-03-2022 |
| | | | WO 2020128813 A1 | | 25-06-2020 |
| EP 1927830 | A2 | 04-06-2008 | CN 101219521 A | | 16-07-2008 |
| | | | EP 1927830 A2 | | 04-06-2008 |
| | | | JP 4321581 B2 | | 26-08-2009 |
| | | | JP 2008137102 A | | 19-06-2008 |
| | | | US 2008133439 A1 | | 05-06-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H832392 B

- JP 2020055052 A